(19) Europäisches Patentamt
European Patent Office
Office européen des brevets

(11) Publication number: **0 038 109**
**B1**

(12) # EUROPEAN PATENT SPECIFICATION

(45) Date of publication of patent specification: **29.08.84**

(21) Application number: **81300446.2**

(22) Date of filing: **03.02.81**

(51) Int. Cl.$^3$: **A 01 N 43/64,** A 01 N 43/50, D 06 M 13/34, C 11 D 3/28, C 09 D 5/14, C 07 D 405/06, C 07 D 249/08, C 07 D 233/60

(54) **Agents and method for the protection of coatings and wood and other non-living organic substrates from deterioration by micro-organisms.**

(30) Priority: **04.02.80 CH 870/80**

(43) Date of publication of application:
**21.10.81 Bulletin 81/42**

(45) Publication of the grant of the patent:
**29.08.84 Bulletin 84/35**

(84) Designated Contracting States:
**AT BE CH DE FR GB IT LI LU NL SE**

(56) References cited:
**DE-A-2 735 872**
**FR-A-2 081 427**
**GB-A-1 522 848**
**GB-A-2 026 486**
**GB-A-2 027 701**
**US-A-3 575 999**
**US-A-3 717 655**
**US-A-3 927 017**
**US-A-4 079 062**
**US-A-4 156 008**
**US-A-4 160 838**

(73) Proprietor: **JANSSEN PHARMACEUTICA N.V.**
**Turnhoutsebaan 30**
**B-2340 Beerse (BE)**

(72) Inventor: **Scharer, Max**
**Sackingerstrasse 22**
**CH-4310 Rheinfelden (CH)**
Inventor: **Muntwyler, Rene**
**Hutmattweg 6**
**CH-4114 Hofstetten (CH)**
Inventor: **Bellus, Daniel**
**Unterm Schellenberg 81**
**CH-4125 Riehen (CH)**
Inventor: **van Gestel, Jozef Frans E.**
**Renier Sniederspad 5**
**B-2350 Vosselaar (BE)**
Inventor: **Duytschaever, Benedikt Domien M.**
**St. Lucaslaan 27**
**B-2070 Ekeren (BE)**

(74) Representative: **Jones, Alan John et al**
**CARPMAELS & RANSFORD 43 Bloomsbury Square**
**London, WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention is concerned with agents and a method for the protection of coatings and wood and other non-living organic substrates against deterioration by micro-organisms, as well as with the anti-microbially protected materials.

It is known from the literature that many halogenated phenols are used to protect the above-mentioned materials and as germ-killing and conserving agents. See in this connection, for example, U.S. Patent Specifications 3,033,746, 3,062,710, 2,215,596 and 3,417,185, British Patent Specification 980,254, Japanese Patent Specifications 29015/68 and 53—26303, German Auslegeshrift 1,160,140, German Offenlegungsschrift 26 07 349, Chemical Reviews, *28*, 269 (1941), Journal of the Scientific Research Institute, *48*, 38—48 (1954), and Arch. Bioch., *40*, 306—309 (1952). The halogenated phenols show important lacks in their spectrum of activity, are inappropriate for certain substrates, show a too high level of toxicity or an unpleasant odor, are in part difficulty accessible, require a high dose or are for other reasons not or only within limits applicable in practice. For example, pentachlorophenol, which is widely used against mould and rotting of textiles and wood shows serious disadvantages, such as a lack of light-fastness and high toxicity. See e.g. in this connection E. Graf and M. Segmüller, Textilveredlung, *12*, 496 (1977) and V. Kubelka, M. Popl and J. Mostecký, Chem. Prum., *23*, 304 (1973).

Further, 1-(4-chlorophenoxy)-1-imidazolyl-(1)-3,3-dimethylbutan-2-one is known from Germany Offenlegungsschrift 2 600 800 as an antifungal agent for the protection of materials. This agent displays however an unsufficient protecting activity in particular against moulds and rotting of textiles.

Consequently, the objective of the subject invention was to provide agents with a higher protecting activity for coatings and wood and other non-living organic substrates against deterioration by microorganisms while lacking the disadvantages of the above-cited compounds.

It has now been found that, in order to protect coatings and wood and other non-living organic substrates from deterioration by microorganisms there may successfully be applied to them, or incorporated in them, an antimicrobially effective amount of a compound of the formula.

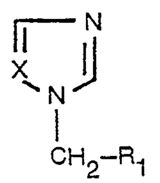

(I)

or acid addition salts thereof,
wherein X is nitrogen or a CH group and $R_1$ is a radical of the formula

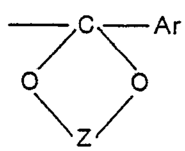

or

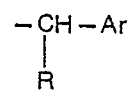

wherein Z is a group $—CH_2—CH_2—$, $—CH_2—CH_2—CH_2—$, $—CH(CH_3)—CH(CH_3$8— or $—CH_2—CH(alkyl)—$, wherein said alkyl is a straight or branched $C_1—C_{10}$ alkyl radical; said Ar is a phenyl group which is optionally substituted with 1 to 3 halogens, $C_1—C_6$ alkyl radicals, $C_1—C_6$ alkoxy radicals, cyano-, trifluoromethyl- or nitro groups, a thienyl-, halothienyl-, naphthalenyl- or fluorenyl group; and said R is $C_1—C_{10}$ alkyl, cycloalkyl, cycloalkyl-lower alkyl, lower alkenyl, aryl-lower alkyl, aryloxy-lower alkyl or a radical of the formula $—O—R_0$, wherein said $R_0$ is $C_1—C_{10}$ alkyl, lower alkenyl, lower alkynyl or aryl-lower alkyl, wherein said aryl radical is phenyl, naphthalenyl or substituted phenyl, wherein said substituted phenyl has 1 to 3 substituents selected from the group consisting of halo, cyano, nitro, phenyl, lower alkyl and lower alkoxy, provided that when two or more substituents are present only one thereof may be cyano, nitro or phenyl.

The methods according to the present invention are characterized by the use of at least one compound of the formula (I) as defined above or an acid addition salt thereof.

Interesting compounds of formula (I) for use in accordance with the present invention are those having the formula

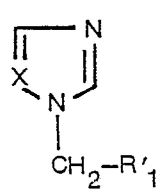

(II)

wherein X has the above-identified meaning and $R'_1$ is a radical of the formula

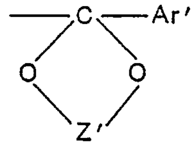 or 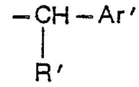

wherein Z' is a group $—CH_2—CH_2—$, $—CH_2—CH_2—CH_2$, $—CH(CH_3)—CH_2—$, $—CH(C_2H_5)—CH_2—$, $—CH(C_3H_7)CH_2—$, or $—CH(CH_3)—CH(CH_3)—$; Ar' is unsubstituted phenyl or phenyl substituted with 1 to 3 halogen atoms, preferably chloro atoms, $C_1—C_6$-alkyl radicals, $C_1—C_6$-alkoxy radicals, cyano or nitro groups; and R' is $C_1—C_6$-alkyl or $C_3—C_4$ alkenyloxy.

Particularly important are compounds of the formula

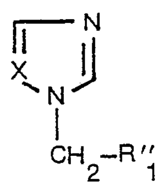

(III)

wherein X has the above-defined meaning and $R''_1$ is a radical of the formula

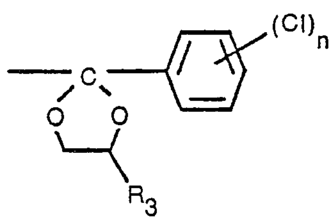 , 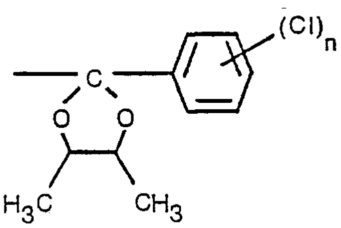 , or 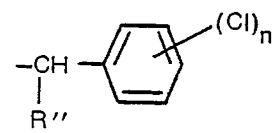

wherein R'' is $C_1—C_4$ alkyl, $C_3—C_4$-lower alkenyloxy, $R_3$ is $C_1—C_3$-alkyl and n is 1 or 2.

Preferred compounds are those of the formulae

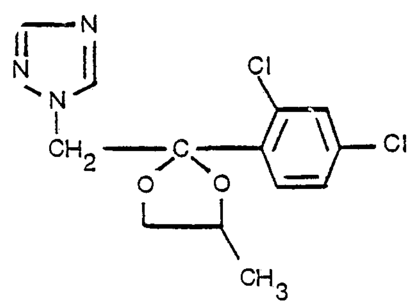

(IV)

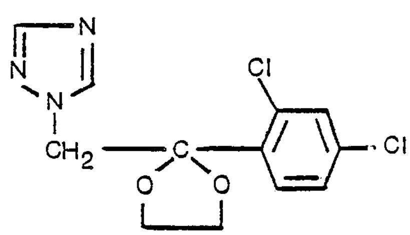

(V)

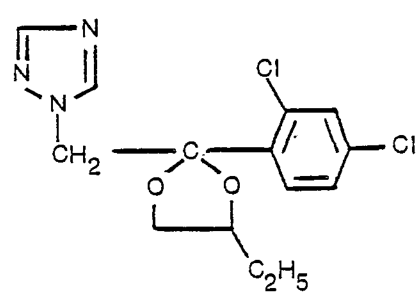

(VI)

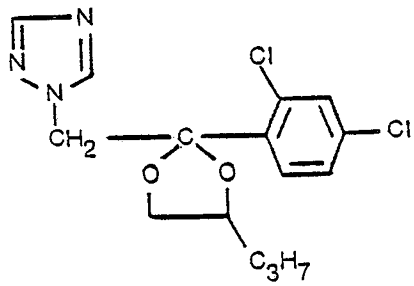

(VII)

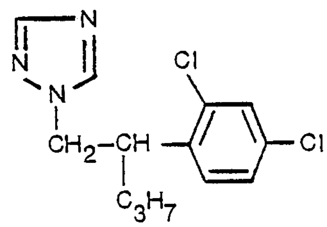

(VIII)

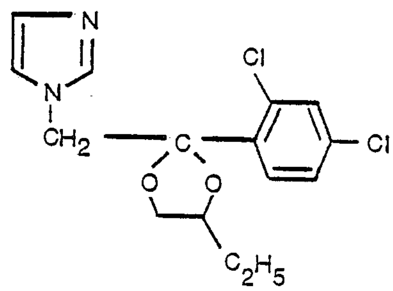

(IX)

and

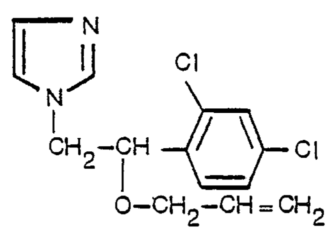

(X)

The compounds of the formulae (I) to (VIII) which may be used in accordance with the present invention may be prepared according to U.S. Patent Specifications 3,575,999, 3,717,655, 3,636,002, 3,927,017, 4,156,008, 4,079,062, British Patent Specifications 2,026,486 and 2,027,701 and German Offenlegungsschrift 27 35 872.

Their good activity against human-, animal- and plant-pathogenic fungi and yeasts is indicated in the afore-cited Patent Specifications. As "coatings and wood and other non-living organic substrates" within the ambit of the present invention are considered, for example, oil paints, dispersion paints, lacquers, whitewash, and colored coatings, lacquer films and white coatings obtained by the use of such agents; wood products such as timber, lumber, railway sleepers, telephone poles, fences, wood coverings, wicker-work, plywood, particle board, chipboard, joinery, bridges or similar wooden structures, wood products commonly used in house-building, or wood pulp used in paper manufacture; joint fillings of tile walls, tiles in polymeric materials, paperhangings, hides, leather, artificial leather, bath carpets, shower curtains, technical devices in plastic, glues, mortar as well as walls which are penetrated of fouled by organic materials, and in particular all textiles such as, for example carpets, canvas, awnings, fishing-nets, ropes and packing materials.

Materials which are treated by methods according to the invention are protected from mould, rotting, loss of their useful mechanical properties such as resistance to sliding, breaking strength, resistance to shock and shearing strength, or decay of their optical or other useful properties such as odor, surface texture, taste, staining, spot formation caused by the following micro-organisms; Aspergillus species, Penicillium species, Verticillium species, Alternaria species, Rhizopus species, Fusarium species, Mucor species, Paecelomyces species, Saccharomyces species, Trichoderma viride, Chaetomium globosum, Stachybotrys atra, Myrothecium verrucaria and Oospora lactis. Special emphasis should be laid on the good activity of the compounds against moulds such as Aspergillus

niger, Pencillium funiculosum Trichoderma viride, Alternaria alternata, fungi such as Chaetomium globosum, Trichophyton mentagrophytes, Coriolus versicolor, Coniophora cerebella, Poria monticola, Merulius (Serpula) lacrymans, and Lenzites trabea, and yeasts such as Candida albicans and Saccharomyces species.

The compounds of formula (I) may be used in accordance with the present invention on their own or in combination with appropriate carriers and/or other additives. Appropriate carriers and additives can be solid or liquid and correspond to the substances usually used in formulation techniques such as natural or regenerated inorganic substances, solvents, dispersants, emulsifiers, wetting agents, adhesion agents, thickeners or binding agents.

The compounds of formula (I) show good solubility in organic solvents and in driving gases for aerosols. The lack of color and odor of the compounds of formula (I) is in this connection of great practical value.

The invention further comprises use of an agent comprising a carrier material and as an active ingredient an antimicrobially effective amount of at least one compound having the formul (I) in protecting coatings and wood and other non-living organic substrates from deterioration by micro-organisms. The following agents can be used to apply compounds of formula I in a method according to the invention.

Solid forms: dusts and wettable powders.
Liquid forms: concentrates of the active ingredients in organic solvents of water

In order to prepare solid forms (dusts, wettable powders) the active ingredients are mixed with the solid carriers.

As carrier materials may be used, for example, kaolin, talc, bolus, löss, chalk, limestone, chalk gravel, attapulgite, dolomite, diatomaceous earth, precipitated silicic acid, alkaline earth metal silicates, sodium- and potassium aluminum silicates (felspar and mica), calcium- and magnesium sulfate, magnesium oxide, as well as their mixtures with each other.

To these mixtures there can also be added stabilizers of the active ingredient and/or non-ionically, anionically and cationically active substances that may for example improve the surface adhesiveness of the active ingredients and/or secure a better wettability (wetting agents) and dispersibility (dispersants).

The following substances may, for example, be used: olein/limestone mixture, cellulose derivatives (methylcellulose, carboxymethylcellulose), hydroxyethyleneglycolethers of mono- and dialkylphenols wth 5 to 15 ethyleneoxide units per molecule and 8 to 9 carbon atoms in the alkyl radical, ligninsulfonic acids and their alkali and alkaline earth metal salts, polyethyleneglycolethers (carbowax), fatty alcohol polyglycolethers with 5 to 20 ethylene oxide units per molecule and 8 to 18 carbon atoms in the fatty alcohol part, condensation products of ethylene oxide, propylene oxide, polyvinylpyrrolidone, polyvinylalcohols, urea/formaldehyde condensation products and latex products.

In water dispersible concentrates, i.e. wettable powders, pastes and emulsifiable concentrates represent agents which can be diluted with water to any desired concentration. They consist of active ingredient, carriers, optionally stabilizers of the active ingredient, surface active substances and antifoam agents and optionally solvents.

The wettable powders and pastes are obtained by mixing and grinding the active ingredients with dispersants and powdery carriers in appropriate apparatus to desired homogeneity. The same carriers as indicated above in connection with the solid forms can be used. In many cases it is advantageous to use mixtures of several carriers.

As dispersants there can be used, for example, anionic, cationic or non-ionic products such as, for example:

— sulfated aliphatic alcohols with 8 to 18 carbon atoms in their alkyl chain; e.g., sulfated lauryl alcohol, oleyl alcohol or coconut oil;

— sulfated unsaturated fatty acids or fatty acid lower alkylesters, which in the fatty radical contain 8 to 20 carbon atoms, e.g., oleic acid or ricinoleic acid and oils containing such fatty acids e.g., ricinus oil;

— alkylsulfonates the alkyl chain of which contains 8 to 20 carbon atoms, e.g., dodecylsulfonate;

— alkylarylsulfonates with straight or branched alkyl chains having at least 6 carbon atoms, e.g., nonyl- or dodecylbenzenesulfonates or 3,7-diisobutylnaphthalenesulfonates;

— sulfonates of polycarboxylic acid esters, e.g., dioctylsulfosuccinate;

— alkali metal, ammonium or amine salts of fatty acids with 10 to 20 carbon atoms which are indicated as soaps, e.g., colophonium salts;

— esters of polyalcohols, in particular mono- or diglycerides of fatty acids with 12 to 18 carbon atoms, e.g., monoglycerides of lauric, stearic or oleic acid;

— acidic esters formed by the reaction of an organic dicarboxylic acid, e.g., maleic, malonic, oxalic or succinic acid or preferably, a polybasic inorganic acid such as phosphoric or, in particular, sulfuric acid, with the addition product of 1 to 60 mol of ethylene oxide and/or propylene oxide with fatty amines, fatty acids, fatty amides or fatty alcohols, each having 8 to 22 carbon atoms or with phenols

which are further substituted with at least a $C_4$—$C_{10}$ alkyl group, a benzyl or phenyl group, or with three- to six-valent alkanols with 3 to 6 carbon atoms;

—salts of primary, secondary and tertiary alkylamines, such as hydrochlorides, nitrates, sulfates, alkylsulfates, formates, acetates, lactates and citrates;

—salts of the reaction products of $C_{10}$—$C_{20}$ fatty acids with di- or polyamines, e.g., the chloride, sulfate, alkylsulfate, acetate, lactate and citrate of stearic acid-N-(β-aminoethyl)amide or of N-oleoyl-triethylenetetramine;

—salts of the reaction products of $C_{10}$—$C_{20}$ alkylhalogenides with polyalkylenepolyamines, e.g., the chloride, sulfate, alkylsulfate, acetate, lactate and citrate of N-lauryldiethylenetetramine, N-octyl-tetraethylenetetramine, N-octadecyl-triethylenetetramine or N-octadeyl-trimethylenediamine;

—salts of addition products of ethyleneoxide with alkylated or acylated di- or polyalkylenepolyamine, e.g., the chloride, sulfate, alkylsulfate, acetate, lactate, and citrate of N-octadecyl-N,N',N'-dioxyethyltrimethylenediamine, N-hexadecyl-N,N',N'-trioxyethyl-ethylenediamine or N-octadecyl-N,N',N'',N''-tetraoxyethyl-diethylenediamine;

—quaternized alkylaryl- or aralkylalkylamines, the nitrogen atom of which bears at least one lipophilic radical of 10 to 20 carbon atoms, e.g., lauryl-dimethyl-benzylammonium chloride, cetyl-dimethyl-benzylammonium chloride or hexadecyl-trimethylammonium bromide;

—quaternized pyridines, the N-atom of which bears an alkyl or alkylol radical with 10 to 20 carbon atoms; e.g., laurylpyridinium chloride or sulfate, cetylpyridinium bromide, octadecyloxy-methylenepyridinium chloride, stearoylaminomethylenepyridinium chloride;

—quaternized imidazolines which are substituted in their 2-position with hydrophobic radicals such as alkyl- or alkylene radicals with 10 to 20 carbon atoms, alkylphenoxymethylene radicals, alkoxy-methylene radicals with 10—18 carbon atoms in the alkoxy part, and alkylthiomethylene radicals with 10—18 carbon atoms in the alkylthio part, e.g., 1 - hydroxyethyl - 1 - methyl - 2 - heptadecenyl-imidazolium metosulfate, 1 - aminoethyl - 1 - methyl - 2 - heptadecenylimidazolinium toluolsulfonate or 1 - (ω - hydroxyethyldecaoxyethylene) - 1 - methyl - 2 - heptadecyl imidazolium methosulfate;

—quaternized benzimidazolines, e.g., N-lauryl-N-methyl-benzimidazolinium chloride;

—quaternized tetrahydropyrimidines, e.g., 1-methyl-1-phenylethyldecaglycolether-2-undecyl-tetrahydropyridinium methosulfate;

—aminooxides such as N-cetyl-N,N-dimethylaminooxide, N-octadecyl-N,N-dioxyethylamino-oxide or N-stearyl-N,N-dimethylaminooxide;

—addition products of preferably 5 to 80 moles alkyleneoxide, in particular ethyleneoxide, whereby individual ethyleneoxide units may be replaced by substituted epoxides, such as styryloxide and/or propyleneoxide, with higher unsaturated or saturated fatty alcohols, fatty acids, fatty amines or fatty amides with 8 to 22 carbon atoms or with phenylphenol or alkylphenols of which the alkyl radical has at least 4 carbon atoms;

—condensation products of propyleneoxides, in particular ethyleneoxide and/or propyleneoxide; and

—reaction products of a $C_8$- to $C_{22}$-fatty acid with a primary or secondary amine which is substituted with at least one hydroxy-lower alkyl or lower alkyloxy-lower alkyl radical, or alkyleneoxide-addition products of these hydroxyalkyl radical containing reaction products, whereby the conversion is effected in such a way that the ratio of the hydroxyalkylamine to the fatty acid can be 1:1 and greater than 1, e.g., 1.1:1 to 2:1.

As anti-foaming agents there may be used, for example, silicone oils.

The active substances are mixed, ground and sieved together with the above-indicated additives in such a way that the solid residues have e.g. a maximal grain size of 0.02 to 0.04 mm in case of wettable powders, and of 0.03 mm in case of pastes.

In order to prepare liquid forms such as solutions, emulsifiable concentrates or pastes, the active ingredients are, in the appropriate proportions dissolved or dispersed, or emulsified, in a solvent or dispersant, which may contain further additives, e.g., dispersants or emulsifiers.

The material to be protected which is treated with an agent according to the invention, should have a content of active ingredient of e.g. from 50 to 20,000 ppm, preferably from 2000 to 15,000 ppm.

The agents are preferably used in the form of solutions. For this purpose, one or more of the active ingredients of formula (I) are dissolved in appropriate organic solvents or solvent mixtures, occasionally in admixture with water.

The content of active ingredient in the above-indicated agent is from 0.01 to 95%, preferably from 0.1 to 3% and in particular from 0.2 to 1.5% by weight.

The method according to the invention is advantageously employed for the conservation and rot-proofing of wood, coatings, natural or other fibres and textiles, whereby the active substances, applied to the materials concerned, display thereon a long-lasting activity against harmful microorganisms. The application of these substances can occur before, together with or after treatment of the materials with other substances, e.g. painting or printing pastes, flame retardants, softeners, water repellant substances and other finishes.

Textiles, wood and coatings which are treated in this manner are protected from mould and rotting caused by microorganisms.

The application forms of the active ingredients may correspond with usual formulations. Agents for the protection of textiles, wood and coatings should contain the active ingredients in a finely divided form.

For the application there may consequently be used solutions, dispersions, and emulsions of the active ingredients. Aqueous dispersions may for example be derived from pastes or concentrates and may be used in liquid form or as an aerosol.

The aqueous solutions, respectively dispersions, appropriately contain tensides (surfactants), for example, anionically active substances, such as soaps and other carboxylates (e.g. alkali salts of higher fatty acids), derivatives of sulfur-oxyacids (e.g. the sodium salt of dodecylbenzene-sulfonic acid, water-soluble salts of sulfuric acid, monoesters of higher alcohols or of their polyglycolethers, such as soluble salts of dodecyl-alcohol-sulfate or of dodecyl-alcohol polyglycolether-sulfate), derivatives of phosphorus-oxyacids (e.g. phosphates), derivatives with an acidic (electrophilic) nitrogen in their hydrophilic radical (e.g. di-sulfine salts), cationically active tensides, such as amines and their salts (e.g. lauryl-diethylenetriamine), onium compounds, amino-oxides, or non-ionogenic tensides, such as polyhydroxy compounds, tensides on basis of mono- or polysaccharides, higher acetylene glycols, polyglycolethers (e.g. polyglycolethers of higher fatty alcohols, polyglycolethers of higher-alkyl-substituted phenols).

At least for textile materials, the formulation may further contain other usual additives, such as water-soluble perborates, polyphosphates, carbonates, silicates, optical brighteners, softeners, acidic salts such as ammonium or zinc siliconfluoride, or certain organic acids such as oxalic acid and further finishes, e.g., on a basis of synthetic resin or starch.

The textile materials can, for example be impregnated with hot or cold colored-, bleaching-, smoothing- or finishing baths containing the active substances, whereby different types of textile treatment may be considered, such as the foulard- or stretching treatment.

The treatment is appropriately carried out at temperatures from 10 to 100°C, for example, from 10 to 70°C, preferably at about room temperature.

In view of their good solubility in organic solvents the active substances are also well suited for application in non-aqueous media. The materials to be protected can thereby easily be impregnated with the solutions. As organic solvents there may be used aliphatic and aromatic hydrocarbons, their chlorinated derivatives, acid amides, mineral oils, alcohols, ethers, glycolethers, such as, methylenechloride, propyleneglycol, methoxyethanol, ethoxyethanol, N,N-dimethylformamide on their own or as mixtures with each other, to which there may be added dispersants (e.g., emulsifiers such as sulfurated ricinus oil, fatty alcohol sulfates etc.) and/or other additives.

Compositions for treatment contain, depending on their purpose of use, from 0.1 to 50 g, preferably from 1 to 30 g of active substance per liter.

As textiles, which are treated, respectively protected, there are primarily considered fibers of natural origin, such as cellulose containing fibers, e.g., cotton, or polypeptide containing fibres, e.g., wool or silk, but also synthetic fibers, such as those on basis of polyamide, polyacrylonitrile or polyester, or mixtures of such fibers.

The amount of active ingredient applied to the textile substances is preferably at least 2000 ppm relative to the material.

In general, the textiles are sufficiently protected from deterioration by microorganisms with an amount of 50 to 20,000, preferably 2,000 to 15,000 ppm of the active substance.

In the treatment of textiles according to the invention, there may at the same time be used a water-repellent agent. As such may be mentioned e.g. paraffin emulsions, zirconium- or aluminum salt-paraffin emulsions, melamine resins, modified melamine resins and polysiloxanes.

By combining the subject compounds with surface-active, in particular wash-active substances there are obtained detergents with excellent activity against microorganisms, in particular fungi.

Said detergents can occur in any desired form, e.g., liquid, pasty, solid, flock or granular. For this purpose, the active substances can be incorporated in aqueous formulations which contain one, or a mixture of two or more, of the above tensides.

Their antimicrobial activity is fully retained thereby.

The content of active ingredient in detergents, calculated by weight, is in general from 0.1 to 20%, mostly from 0.1 to 3%. Aqueous preparations of such detergents, which contain the active substances can, for example, be used for the antimicrobial treatment of textiles, wood or coatings.

They are also suitable for antimicrobial cleaning in the food and beverages industry, e.g., in breweries, dairies, cheese factories, stables and abattoirs.

The method of the invention can further be used to protect the most different surfaces from deterioration by microorganisms. In particular should be mentioned in this respect, the treatment of leather, skins and hides. It is however also possible to protect with the method of the invention vessels in which any technical materials are stored, floors, walls and equipment of stables, abattoirs, fruit stores, incubators etc. affected by organic materials. The equipment or surfaces are, depending on their

shape, sprayed (e.g. with a spray), brushed or steeped, or dipped, with the solution or dispersion being used.

As organic solvents there may, for example, be cited water-immiscible solvents such as, lower alcohols (e.g. ethanol, methanol), ethyleneglycolmonomethylether or -monoethylether.

Preferably there is applied such an amount of the agent that, after the application, the equipment etc. bears 0.01 to 50 g/m$^2$ of the active substance.

The method of the invention can also be applied in the cellulose and paper industry. In particular in order to prevent slime formation by microorganisms in apparatus which is used in the manufacture of paper. For this purpose, the active substance is added either to the paper mass or to the water circuit, optionally in admixture with known antibiotics. The method of the invention can also be applied in an analogous form in other industrial plants where destruction by microorganisms can be expected. The amount of active ingredient usually has to be at least 50 ppm, in practice about 100 to 10,000 ppm and preferably 200 to 5000 ppm. When added to water circuits a concentration of 50 ppm is often sufficient.

The compounds of formula (I) are also suited for the protection of non-living organic materials such as glues, binders, textile additives, refining agents, printing pastes or technical formulations in general. They may further be used to prevent and destroy fungal infections in animal oils, fats and emulsions such as cutting oils and drilling oils. Softeners, filling ups (e.g. on basis of polyvinyl alcohol or starch) may be protected. Also plastics of any kind, e.g. polyamides, polycarbonates, polyesters, polyvinyl chloride, polyolefins or polyvinyl alcohol can advantageously be protected from deterioration by bacteria and fungi. When softeners are used it is advantageous to dissolve or disperse the active substance in the softener and add it to the plastic.

In order to suit the purpose care should be taken that the distribution in the plastic is as homogeneous as possible. The thus obtained plastics can be used to make useful objects of any kind, such as for example food-mats, shower-curtains, seats, gratings in swimming pools, wall coverings, tennis-court pavements, etc.

The active substances are also excellently suited for the treatment of carpets against fungal infection, in particular to warrant the useful properties of the carpets, but also as a preventive measure to combat fungi of the feet; and for incorporation in waxes and polishes which then have antimicrobial actions when used on floors and furniture.

In carpet treatment the carpets can be treated in the same manner as the above-cited textile substrates, or the active substances are incorporated in a carpet-shampoo or carpet-treating agent at a concentration of 0.1 to 5% and then display their action when the carpets are treated.

In the method of the invention, the active substances can also be used in combination with other antimicrobial agents, whereby an increased activity is often achieved. As antimicrobial agents, which may be used in combination with the compounds of formula I there may be considered compounds of the following classes:

Phenol derivatives such as 3,5-dichlorophenol, 2,5-dichlorophenol, 3,5-dibromophenol, 2,5-dibromophenol, 2,5-(or 3,5)-dichloro-4-bromophenol, 3,4,5-trichlorophenol, chlorinated hydroxy-diphenylethers such as, 2-hydroxy-3,2',4'-trichlorodiphenylether, phenylphenol, 4-chloro-2-phenylphenol, 4-chloro-2-benzylphenol, dichlorophene, hexachlorophene; aldehydes such as formaldehyde, glutaraldehyde, salicylaldehyde; alcohols such as phenoxyethanol; antimicrobially active carboxylic acids and their derivatives; organometallic compounds such as tributyltin compounds; iodine compounds such as iodophores, iodonium compounds; mono-, di- and polyamines such as dodecylamine or 1,10-di(n-heptyl)-1,10-diaminodecane; quaternary ammonium compounds such as benzyl-dimethyldodecylammonium chloride, dimethyldodecylammonium chloride, benzyl-di(2-hydroxyethyl)dodecylammonium-chloride; sulfonium- and phosphonium compounds; mercapto compounds as well as their alkali, alkaline earth and heavy metal salts such as 2-mercaptopyridine-N-oxide and its sodium and zinc salt, 3-mercaptopyridazin-2-oxide, 2-mercapto-quinoxaline-1-oxide, 2-mercapto-quinoxaline-di-N-oxide, as well as the symmetrical disulfides of said mercapto compounds; ureas such as tribromo- or trichlorocarbanilide, dichloro-trifluoromethyl-diphenylurea; tribromosalicylanilide; 2-bromo-2-nitro-1,3-dihydroxypropane; dichlorobenzoxyazolon; chlorohexidine; isothia- and benzisothiazolone derivatives.

The following Examples illustrate the invention. In the Examples, the compounds tested are the above-identified Compounds IV, VI, VIII and IX, unless otherwise indicated.

Example I

Testing of fungicidal activity of the active substances by the agar-incorporation test:

Of the compounds of formula (I) there is made each time a 5% stock solution in ethyleneglycol monomethylether. From this stock solution there is prepared a dilution series wherein the concentrations differ each time by a factor of 10. 0.3 ml of the thus obtained solutions are brought into sterile Petri dishes and mixed with 15 ml of hot liquid nutrient medium (mycophil-agar). The nutrient media then contain 1000, 100, 10, 1 and 0.1 ppm of the active substance.

After solidification of the plates there is dropped thereon with a Pasteur pipette or an inoculation device a germ suspension of Aspergillus niger ATCC 6275. The incubatión time is 3 to 4 days at 28°C.

Thereafter it is stated at which the concentration of the active substance growth of the germs can still be observed. The compounds tested show a good activity against Aspergillus niger.

Example II

The compounds of formula (I) are dissolved each time in an appropriate organic solvent (ethyleneglycol monoethylether). The three different textile substrates listed below are steeped therein and subsequently squeezed between two layers of aluminum film and thereafter dried in air. The squeezing pressure is set such that 1000 ppm of the active substance remain on the tissue. The following are used in the test:

1. Lixiviated and bleached reinforced cotton of weight 121 $g/m^2$.
2. Fixed and bleached polyamide staple-fibres of weight 140 $g/m^2$.
3. Fixed and bleached polyester dacron staple-fibres of weight 130 $g/m^2$.

The substrates are tested according to the agar-diffusion test (modified AATCC-test method 90, 1970) against the 3 test organisms listed below.

Candida albicans ATTC 10259
Trichophyton mentagrophytes ATCC 9533
Aspergillus niger ATCC 6275

The test plates consist of a double layered agar, i.e. of a ground layer of non-inoculated nutrient medium and a cover layer of an inoculated nutrient medium (Mycophil-agar).

After solidification of the inoculated cover layer there are put thereon rounds of 20 mm diameter of the treated substrates. The plates inoculated with Candida albicans are incubated for 24 hours at 37°C, and those inoculated with Trichophyton mentagrophytes and Aspergillus niger for 3 to 5 days at 28°C. The growth inhibiting action is evaluated thereafter on basis of the resulting inhibition zone on the plate.

When an inhibition zone is lacking, the growth under the test object is also evaluated.

The compounds of formula (I), tested in this manner, show in combination with the substrates used a good activity against the microorganisms tested.

Example III

The active substances, dissolved in ethyleneglycolmonoethylether, are applied, by Foulard, to different textiles such as, cotton, polyester/cotton. There is applied a concentration of the active substance of 0.6% relative to the tissue.

Sterile plastic disks are thereafter filled with nutrient medium, such as cellulose, or oak-malt agar.

After solidification of the agar, the plates are inoculated with a spore suspension (germ number about $1 \times 10^5$/ml).

Test microorganisms are:

Trichoderma viride ATCC 8678
Chaetomium globosum ATCC 6205
Penicillium funiculosum ATCC 9644
Aspergillus niger ATCC 6275

Textile rounds of 40 mm diameter are subsequently put on the plates, which are then incubated for 2 weeks at 29° ± 1°C. At the final evaluation there is only qualitatively examined whether the textile rounds are grown by test organisms.

The compounds of formulae (IV) to (X) show an excellent activity in this test.

Example IV

Foulard application from 2 Foulard formations.

First Foulard formulation.

5.7 g/l of active ingredient dissolved in ethyleneglycolmonoethylether.

*Substrate:* bleached cotton cretonné of 210 $g/m^2$

*Liquid uptake:* 70%.

1 passage through Peter-Vertical-Foulard and subsequent drying at 80°C during 5 minutes. Then follows the second Foulard treatment.

Second Foulard formulation.

150 g/l water repellent agent (e.g. a 35% zirconium paraffin emulsion)

1.5 mg/l of acetic acid 80%.

*Liquid uptake:* 70%.

1 passage through Peter-Vertical-Foulard and subsequent drying at 120°C during 90 seconds.

Thereafter the substrate is conditioned for 18 hours at room tempreature. Out of the treated tissue are punched rounds of 40 mm diameter which are further processed as in example III.

The compounds of formulae IV to X show excellent activity in this anti-fungal test.

Example V

The active substance is applied each time in ethyleneglycol monoethylether to cotton by the Foulard process in such a way that the active substance is present in a concentration of 1.5% by weight of the substrate.

The treated tissue is cut in 10 strips (10 x 2.5 cm) and these are buried obliquely in plates filled with compost soil.

After storage for 2, or 4 weeks at 29°C and 97% relative humidity, the test strips are dug up, rinsed with cold water and dried.

The tissue samples, treated with compounds (IV) to (X) show in this rotting test a clearly better resistance against attack by microorganisms living in the soil.

This is evaluated on basis of a rent-resistance test.

Example VI

The following mixture is rolled for 20 minutes at 150°C between laminated rollers.

100.00 g polyvinylchloride.
19.20 g di(2-ethylhexylphthalate)
27.00 g di(2-ethylhexylcebacate).
1.50 g Ba/Cd-laurate
0.25 g stearic acid
3.10 g of a compound of formula (I).

The distance between the rollers is adjusted such that there are formed 1 mm thick films which are subsequently pressed for 20 minutes at 165 to 170°C at 1400 kg/cm$^2$.

In order to investigate the activity against fungi there are punched rounds of 10 mm diameter which are put on Mycophil-agar plates, previously inoculated with Aspergillus niger ATCC 6275. Thereafter the plates are incubated for 3 days at 28°C. In all cases a pronounced inhibition of fungal growth is observed under the rounds.

Example VII

Emulsifiable concentrates: The following substances are used to prepare a 25% emulsifiable concentrate:

25 parts of active ingredient
2.5 parts of epoxidized vegetable oil
10 parts of an alkylarylsulfonate/fatty alcohol-polyglycolether mixture
5 parts of N,N-dimethylformamide
57.5 parts of xylene.

From such concentrates there can be prepared emulsions with any desired concentration by dilution with water.

Example VIII

An oil-soluble concentrate is prepared by mixing the following substances:

20 parts of active substance
40 parts of ethyleneglycol monoethylether
10 parts of N,N-dimethylformamide
30 parts of xylene

This concentrate is admixed with a cutting oil in a concentration of 0.1%. Protection from microbiological deterioration is obtained thereby.

Example IX

A wettable powder is obtained by mixing the following substances:

55 parts of active substance
3 parts of polyethyleneoxide
5 parts of ligninsulfonic acid
20 parts of diatomaceous earth
17 parts of clay.

The powder is suspended in water and can be sprayed on surfaces in order to inhibit fungal growth.

Example X

The concentrate, prepared according to Example VII is diluted 10 to 100 fold with water and added to the water circuit in a machine for paper manufacture in such an amount that the concentration of the active substance is from 20 to 200 ppm. The slime formation which otherwise occurs is actively suppressed thereby.

Example XI

Of the compounds of formula (I) there is made each time a 5% stock solution in ethyleneglycolmonoethylether. From this stock solution there is prepared a dilution series wherein the concentrations differ each time by a factor of 10. 0.3 ml of the thus obtained solutions are brought into sterile Petri dishes and mixed with 15 ml of hot liquid nutrient medium (yeast-malt-agar; oak-malt-agar; Sabouraud-maltose-agar). The nutrient medium then contains 1000, 100, 10, 1 or 0.1 ppm of active substance. After solidification of the plates there is dropped thereon with a Pasteur pipette or an inoculation device a germ suspension of the following organisms:

Poria placenta EMPA 229
Serpula lacrymans EMPA 342
Coniophora puteana EMPA 62
Glucophyllum trabeum EMPA 100
Aureobasideum pullulans EMPA 316
Sclerophoma pityophila EMPA 315

The incubation time is 3 to 4 days at 28°C. Thereafter it is stated at which concentration of the active substance growth of the germs can still be observed. The compounds tested show a good fungistatic activity against these test fungi.

Example XII

(Wood rot test)

The active substance is dissolved in an appropriate organic solvent. The wood to be protected is treated by the dipping technique (European norm 113). The concentration has to be chosen that 1 to 3 kg of active substance is available per $m^3$ of wood.

The treated wood is buried for 12 to 16 weeks in a compost soil at 29 ± 10°C and 97% relative air humidity. Thereafter the wood is washed in cold water and dried.

The treated wood shows much better protection against attack by microorganisms living in the soil than untreated wood.

Example XIII

(Brown rot test)

Pinus sylvestris wood blocks of 5 × 2.5 × 0.5 cm were autoclaved for 20 minutes, subsequently dried for 19.5 hours at 100—110°C, allowed to cool in a desiccator and weighed (initial dry weight). One ml of 0.125% solution of the test compound in a 1/1 methanol/water mixture is equally distributed over the wood block so that the final concentration in the wood is 2 kg a.i./$m^3$. Blocks treated with water and with 1/1 methanol/water are included as controls. The blocks are allowed to dry in a laminar flow chamber. Evaporation of the solvent is performed in an oven at 50°C for 3 hours.

The blocks are then transferred onto malt-agar Petri dishes which have been inoculated 8 days before with Coniophora puteana. Two blocks, treated with the same concentration of active ingredient are placed on a small stainless steel frame in the Petri dish to allow contact with the aerial mycelium of the fungus and to avoid contact with the agar medium.

The blocks are exposed to fungal attack for 8 weeks at 25°C. They are then freed from adhering mycelium, oven-dried for 19.5 hours at 100—110°C and dried. In the following table are given mean results obtained on 4 blocks.

| Treatment | Mean weight loss in % |
|---|---|
| 1. water | 28.05 |
| 2. l/l methanol/water | 30.45 |
| 3. compound (V) 2 kg/$m^3$ | 14.15 |
| 4. compound (VI) 2 kg/$m^3$ | 2.03 |

Example XIV

(White rot test)

Fagus sylvatica wood blocks of 5 x 2 x 0.6 cm are oven-dried for 18 hours, cooled in a desiccator and weighed. The test blocks are laid down in a Petri dish bottom and placed in a vacuum desiccator.

Pressure is reduced to 40 mbar with a suction pump. The blocks are impregnated with a test solution comprising 3000 or 1500 ppm of the active substance in 50% aqueous methanol through a tube leading to the Petri dish. When the blocks are well-covered vacuum is released, the Petri dish is removed from the desiccator and left for two hours in order to saturate the blocks. Control blocks are treated in the same manner with 50% aqueous methanol. The blocks are tamponed with filter paper, weighed and the amount of test compound taken up is calculated.

Four blocks are used for each compound and concentration.

The blocks are then sterilized by treating them 3 times for 5 minutes with steam of about 100°C. Six days after treatment the blocks are transferred to malt-agar Petri dishes which have been inoculated 20 days before with Coriolus versicolor. Two blocks, one treated and one control, are placed on a stainless steel frame in the Petri dish.

The test blocks are exposed to fungal attack for 8 weeks at 25°C.

In order to avoid desiccation the Petri dishes are put together in a plastic bag.

The blocks are scored visually according to the following score system.

score 0 = no attack.
score 1 = slight attack.
score 2 = moderate attack.
score 3 = severe attack.

The blocks are freed from adhering mycelium, oven-dried for 18 hours at 100—110°C, allowed to cool in a desiccator and weighed.

The mean results obtained on 4 blocks each time are given in the following table.

| Treatment | Conc. a.i. in kg/m³ wood | Weight loss in % | Visual score |
|---|---|---|---|
| 1. Compound (V) 3000 ppm | 1.93 | 0 | 0 |
| control | — | 17 | 3 |
| 2. Compound (V) 1500 ppm | 0.93 | 0 | 0 |
| control | — | 19 | 3 |
| 3. Compound (VI) 3000 ppm | 1.85 | 0 | 0 |
| control | — | 20 | 3 |
| 4. Compound (VI) 1500 ppm | 0.96 | 0 | 0 |
| control | — | 16 | 3 |

**Claims**

1. A method for the protection of coatings and wood and other non-living organic substrates from deterioration by microorganisms which comprises applying to them, or incorporating in them an anti-microbially effective amount of at least one compound having the formula.

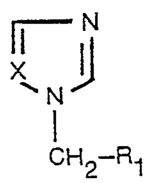

(I)

and the organic and inorganic acid additions salts thereof wherein:

X is a member selected from the group consisting of N and CH; and

$R_1$ is a member selected from the group consisting of the radicals

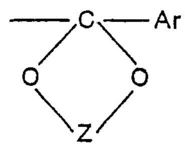

and

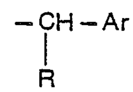

wherein said Z is a member selected from the group consisting of $-CH_2-CH_2-$, $-CH_2-CH_2-CH_2-$, $-CH(CH_3)-CH(CH_3)-$ and $-CH_2-CH(alkyl)-$, wherein said alkyl is a straight or branched alkyl radical with 1 to 10 carbon atoms; said Ar is a member selected from the group consisting of phenyl, substituted phenylthienyl, halothienyl, naphthalenyl and fluorenyl, wherein said substituted phenyl has from 1 to 3 substituents selected from the group consisting of halo, $C_1-C_6$-alkyl, $C_1-C_6$-alkoxy, cyano, trifluoromethyl and nitro; and said R is a member selected from the group consisting of $C_1-C_{10}$-alkyl cycloalkyl, cycloalkyl-lower alkyl, lower alkenyl, aryl-lower alkyl, aryloxy-lower alkyl and a radical $-O-R_0$ wherein said $R_0$ is selected from the group consisting of $C_1-C_{10}$-alkyl, lower alkenyl, lower alkynyl and aryl-lower alkyl, wherein said aryl radical is selected from the group consisting of phenyl, naphthalenyl and substituted phenyl, the latter having 1 to 3 substituents selected from the group consisting of halo, cyano, nitro, phenyl, lower alkyl and lower alkoxy, provided that when two or more substituents are present only one thereof may be cyano, nitro or phenyl.

2. A method according to claim 1 wherein said compound has the formula

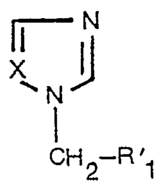

wherein:

X is a member selected from the group consisting of N and CH;

$R'_1$ is a member selected from the group consisting of the radicals

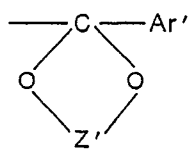

and

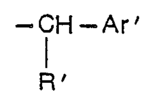

wherein said Z' is a member selected from the group consisting of $-CH_2-CH_2-$, $-CH_2-CH_2-CH_2-$, $-CHCH_3)-CH_2-$, $-CH(C_2H_5)-CH_2-$, $CH(C_3H_7)-CH_2-$, and $-CH(CH_3)-CH(CH_3)-$; said Ar' is phenyl optionally substituted with 1 to 3 substituents selected from the group consisting of halo, $C_1-C_6$-alkyl, $C_1-C_6$-alkoxy, cyano and nitro and R' is $C_1-C_6$-alkyl or $C_3-C_4$-alkenyloxy.

3. A method according to claim 2 wherein said compound has the formula

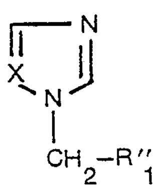

wherein

X is a member selected from the group consisting of N and CH; and

$R''_1$ is a member selected from the group consisting of the radicals

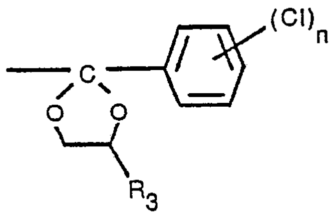 , 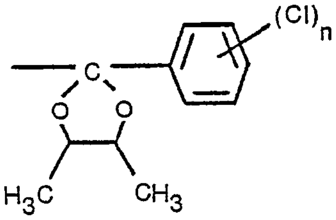 , and 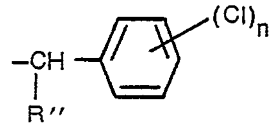

wherein said R″ is selected from the group consisting of $C_1$—$C_4$-alkyl and $C_2$—$C_4$ lower alkenyloxy, said $R_3$ is hydrogen or $C_1$—$C_3$-alkyl and n is the integer 1 or 2.

4. A method according to claim 3 wherein said compound is 1-[2-(2,4-dichlorophenyl)-4-methyl-1,3-dioxolan-2-ylmethyl]-1*H*-1,2,4-triazole.

5. A method according to claim 3 wherein said compound is 1-[2-(2,4-dichlorophenyl)-1,3-dioxolan-2-ylmethyl]-1*H*-1,2,4-triazole.

6. A method according to claim 3 wherein said compound is 1-[2-(2,4-dichlorophenyl)-4-ethyl-1,3-dioxolan-2-ylmethyl]-1*H*-1,2,4-triazole.

7. A method according to claim 3 wherein said compound is 1-[2-(2,4-dichlorophenyl)-4-propyl-1,3-dioxolan-2-ylmethyl]-1*H*-1,2,4-triazole.

8. A method according to claim 3 wherein said compound is 1-[2-(2,4-dichlorophenyl)-pentyl]-1*H*-1,2,4-triazole.

9. A method according to claim 3 wherein said compound is 1-[2-(2,4-dichlorophenyl)-4-ethyl-1,3-dioxolan-2-ylmethyl]-1*H*-imidazole.

10. A method according to claim 3 wherein said compound is 1-(β-allyloxy-2,4-dichlorophenethyl)imidazole.

11. A method according to any one of claims 1 to 10, wherein the compound is included as the active ingredient in a composition comprising a carrier material.

12. A method according to any of claims 1 to 11 wherein the composition comprises from 0.1 to 10% of at least one compound of formula (I) as defined in any one of claims 1 to 10, by weight.

13. A method according to any one of claims 1 to 12 for the protection of textiles as non-living organic substrates.

14. A method according to any one of claims 1 to 13 for the protection of textile substrates consisting of cotton, polyamide, polyacrylonitrile or polyester.

15. A method according to any one of claims 1 to 12 for the protection of wood.

16. A method according to any one of claims 1 to 15 wherein from 50 to 20,000 ppm of at least one compound of the formula (I) as defined in any of claims 1 to 10 are applied to or incorporated in the material to be protected.

17. A method according to any one of claims 1 to 16, wherein a detergent material is also applied to or incorporated into the coating or wood or other non-living organic substrate.

18. A method according to claim 17, wherein the compound and the detergent material are applied or incorporated as an antiseptic detergent.

19. A method according to claim 18, wherein the antiseptic detergent comprises from 0.1 to 20% by weight of at least one compound of the formula (I) as defined in any one of claims 1 to 10.

20. A method according to claim 18, wherein the antiseptic detergent comprises from 0.1 to 3% by weight of at least one compound of the formula (I) as defined in any of claims 1 to 10.

21. The use of an agent comprising a carrier material and as an active ingredient an antimicrobially effective amount of at least one compound having the formula (I) as defined in any one of claims 1 to 10 in protecting coatings and wood and other non-living organic substrates from deterioration by microorganisms.

22. The use of an agent according to claim 21, wherein the agent comprises from 0.1 to 10% of the active ingredient.

23. The use of an antiseptic detergent comprising a detergent material and as an active ingredient an antimicrobially effective amount of at least one compound of the formula (I) as defined in any one of claims 1 to 10 in protecting coatings and wood and other non-living organic substrates from deterioration by microorganisms.

24. The use of an antiseptic detergent according to claim 23, wherein the detergent comprises from 0.1 to 20% by weight of the active ingredient.

25. The use of an antiseptic detergent according to claim 23, wherein the detergent comprises from 0.1 to 3% by weight of the active ingredient.

**Revendications**

1. Une méthode pour la protection des peintures, du bois et d'autres substrats organiques non vivants contre la détérioration provoquée par les micro-organismes, qui comprend l'application ou l'incorporation à ceux-ci d'une quantité antimicrobienne efficace d'au moins un composé ayant pour formule:

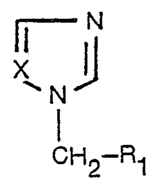

et leurs sels d'addition d'acides organiques et minéraux dans laquelle:

X est choisi dans le groupe constitué par N et CH; et

$R_1$ est choisi dans le groupe constitué par les radicaux:

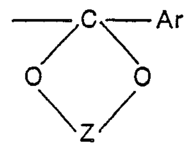 et 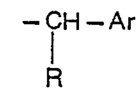

dans lesquels Z est choisi dans le groupe constitué par $—CH_2—CH_2—$, $—CH_2—CH_2—CH_2—$, $—CH(CH_3)—CH(CH_3)—$ et $—CH_2—CH$(alkyle)- où ledit alkyle est un radical alkyle droit ou ramifié ayant 1 à 10 atomes de carbone; ledit Ar est choisi dans le groupe constitué par un phényle, un phényle substitué, un thiényle, un halogénothiényle, un naphtyle et un fluorényle, où ledit phényle substitué a 1 à 3 substituants choisis parmi un halogéno, un alkyle en $C_1—C_6$, un alcoxy en $C_1—C_6$, un cyano, un trifluorométhyle et un nitro; et ledit R est choisi dans le groupe constitué par un alkyle en $C_1—C_{10}$, un cycloalkyle, un cycloalkyle-alkyle inférieur, un alcényle inférieur, un aryl-alkyle-alkyle inférieur, un aryloxy-alkyle inférieur et un radical $—O—R_o$ dans lequel ledit $R_o$ est choisi dans le groupe constitué par un alkyle en $C_1—C_{10}$, un alcényle inférieur, un alcynyle inférieur et un aryl-alkyle inférieur, où ledit radical aryle est choisi dans le groupe constitué par un phényle, un naphtyle et un phényle substitué, ce dernier ayant 1 à 3 substituants choisis dans le groupe constitué par un halogéno, un cyano, un nitro, un phényle, un alkyle inférieur et un alcoxy inférieur, sous réserve que lorsque deux ou plusieurs substituants sont présents, un seul d'entre eux puisse être un cyano, un nitro ou un phényle.

2. Une méthode selon la revendication 1, dans laquelle ledit composé a pour formule:

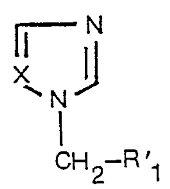

dans laquelle:

X est choisi dans le groupe constitué par N et CH;

$R'_1$ est choisi dans le groupe constitué par les radicaux

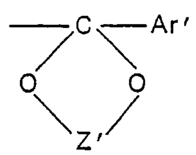 et 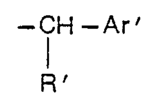

dans lesquels ledit Z' est choisi dans le groupe constitué par $—CH_2—CH_2—$, $—CH_2—CH_2—CH_2—$, $—CH(CH_3)—CH_2$, $—CH(C_2H_5)—CH_2—$, $—CH(C_3H_7)—CH_2—$ et $—CH(CH_3)—CH(CH_3)—$; ledit Ar' est un phényle éventuellement substitué par 1 à 3 substituants choisis dans le groupe constitué par un halogéno, un alkyle en $C_1—C_6$, un alcoxy en $C_1—C_6$, un cyano et un nitro, et R' est un alkyle en $C_1—C_6$ ou un alcényloxy en $C_3—C_4$.

3. Une méthode selon la revendication 2, dans laquelle ledit composé a pour formule:

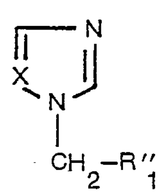

dans laquelle:

X est choisi dans le groupe constitué par N et CH; et

$R'_1$ est choisi dans le groupe constitué constitué par les radicaux

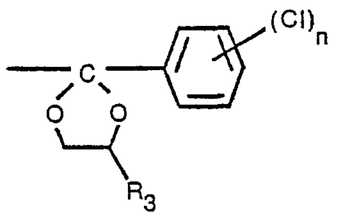 , 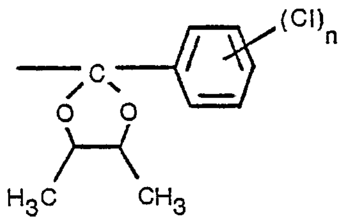 , et 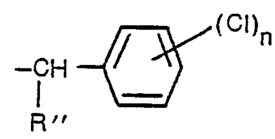

dans lesquels ledit R″ est choisi dans le groupe constitué par un alkyle en $C_1$—$C_4$ et un alcényloxy inférieur en $C_2$—$C_4$, ledit $R_3$ est un hydrogène ou un alkyle en $C_1$—$C_3$, et n est l'entier 1 ou 2.

4. Une méthode selon la revendication 3, dans laquelle ledit composé est le 1-[2-(2,4-dichlorophényl)-4-méthyl-1,3-dioxolan-2-ylméthyl]-1H-1,2,4-triazole.

5. Une méthode selon la revendication 3, dans laquelle ledit composé est le 1-[2-(2,4-dichlorophényl)-1,3-dioxolan-2-ylméthyl]-1H-1,2,4-triazole.

6. Une méthode selon la revendication 3, dans laquelle ledit composé est le 1-[2-(2,4-dichlorophényl)-4-éthyl-1,3-dioxolan-2-ylméthyl]-1H-1,2,4-triazole.

7. Une méthode selon la revendication 3, dans laquelle ledit composé est le 1-[2-(2,4-dichlorophényl)-4-propyl-1,3-dioxolan-2-ylméthyl]-1H-1,2,4-triazole.

8. Une méthode selon la revendication 3, dans laquelle ledit composé est le 1-[2-(2,4-dichlorophényl-pentyl]-1H-1,2,4-triazole.

9. Une méthode selon la revendication 3, dans laquelle ledit composé est le 1-[2-(2,4-dichlorophényl)-4-éthyl-1,3-dioxolan-2-ylméthyl]-1H-imidazole.

10. Une méthode selon la revendication 3, dans laquelle ledit composé est le 1-(β-allyloxy-2,4-dichlorophénéthyl)-imidazole.

11. Une méthode selon l'une quelconque des revendications 1 à 10, dans laquelle le composé est contenu comme ingrédient actif dans une composition comprenant une matière support.

12. Une méthode selon l'une quelconque des revendications 1 à 11, dans laquelle la composition comprend 0,1 à 10% en poids d'au moins un composé de formule (I) comme défini dans l'une quelconque des revendications 1 à 10.

13. Une méthode selon l'une quelconque des revendications 1 à 12 pour la protection des textiles comme substrats organiques non vivants.

14. Une méthode selon l'une quelconque des revendications 1 à 13 pour la protection des substrats textiles constitués de coton, de polyamide, de polyacrylonitrile ou de polyester.

15. Une méthode selon l'une quelconque des revendications 1 à 12 pour la protection du bois.

16. Une méthode selon l'une quelconque des revendications 1 à 15, dans laquelle 50 à 20 000 ppm d'au moins un composé de formule (I) comme défini dans l'une quelconque des revendications 1 à 10 sont appliquées ou incorporées à la matière à protéger.

17. Une méthode selon l'une quelconque des revendications 1 à 16, dans laquelle une matière détergente est également appliquée ou incorporée à la peinture, au bois ou à un autre sbstrat organique non vivant.

18. Une méthode selon la revendication 17, dans laquelle le composé et la matière détergente sont appliqués ou incorporés comme un détergent antiseptique.

19. Une méthode selon la revendication 18, dans laquelle le détergent antiseptique comprend 0,1 à 20% en poids d'au moins un composé de formule (I) comme défini dans l'une quelconque des revendications 1 à 10.

20. Une méthode selon la revendication 18, dans laquelle le détergent antiseptique comprend 0,1 à 3% en poids d'au moins un composé de formule (I) comme défini dans l'une quelconque des revendications 1 à 10.

21. L'utilisation d'un agent comprenant une matière support et, comme ingrédient actif, une quantité antimicrobienne efficace d'au moins un composé répondant à la formule (I) comme défini dans l'une quelconque des revendications 1 à 10 dans la protection des peintures, du bois et d'autres substrats organiques non vivants contre la détérioration par les micro-organismes.

22. L'utilisation d'un agent selon la revendication 21, dans laquelle l'agent contient 0,1 à 10% de l'ingrédient actif.

23. L'utilisation d'un détergent antiseptique comprenant une matière détergente et, comme ingrédient actif, une quantité antimicrobienne efficace d'au moins un composé de formule (I) comme défini dans l'une quelconque des revendications 1 à 10 dans la protection des peintures, du bois et d'autres substrats organiques non vivants contre la détérioration par les microorganismes.

24. L'utilisation d'un détergent antiseptique selon la revendication 23, dans laquelle le détergent contient 0,1 à 20% en poids de l'ingrédient actif.

25. L'utilisation d'un détergent antiseptique selon la revendication 23, dans laquelle le détergent contient 0,1 à 3% en poids de l'ingrédient actif.

**Patentansprüche**

1. Ein Verfahren zum Schutz von Anstrichen, Holz und anderen unbelebten organischen Substraten vor einer Schädigung durch Mikroorganismen, welches ein Aufbringen auf diese oder ein Einverleiben in diese Substrate einer antimikrobiell wirksamen Menge wenigstens einer Verbindung mit der Formel

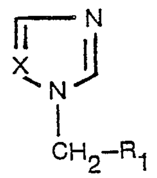

(I)

und der organischen oder anorganischen Säureadditionssalze hievon umfaßt, worin:

X ein Vertreter aus der aus N und CH bestehenden Gruppe ist; und

$R_1$ ein Vertreter aus der aus den Resten

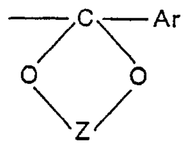

und

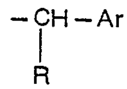

bestehenden Gruppe ist, worin das genannte Z ein Vertreter aus der aus $-CH_2-CH_2-$, $-CH_2-CH_2-CH_2-$, $-CH(CH_3)-CH(CH_3)-$ und $-CH_2-CH(Alkyl)-$ bestehenden Gruppe ist, worin genanntes Alkyl ein gerader oder verzweigter Alkylrest mit 1 bis 10 Kohlenstoffatomen ist; genanntes Ar ein Vertreter aus der aus Phenyl, substituiertem Phenyl, Thienyl, Halogenthienyl, Naphthalenyl und Fluorenyl bestehenden Gruppe ist, worin genanntes substituiertes Phenyl von 1 bis 3 Substituenten aufweist, ausgewählt aus der aus Halogen, $C_1-C_6$-Alkyl, $C_1-C_6$-Alkoxy, Cyano,Trifluormethyl und Nitro bestehenden Gruppe; und genanntes R ein Vertreter, ausgewählt aus der aus $C_1-C_{10}$-Alkyl, Cycloalkyl, Cycloalkyl-niederalkyl, Niederalkenyl, Arylniederalkyl, Aryloxyniederalkyl und einem Rest $-O-R_0$ bestehenden Gruppe ist, worin das genannte $R_0$ ausgewählt ist aus der aus $C_1-C_{10}$-Alkyl, Niederalkenyl, Niederalkinyl und Arylniederalkyl bestehenden Gruppe, worin der genannte Arylrest ausgewählt ist aus der aus Phenyl, Naphthalenyl und substituiertem Phenyl bestehenden Gruppe, wobei der letztgenannte Rest 1 bis 3 Substituenten aufweist, ausgewählt aus der aus Halogen, Cyano, Nitro, Phenyl, Niederalkyl und Niederalkoxy bestehenden Gruppe, mit der Maßgabe, daß dann, wenn 2 oder mehr Substituenten zugegen sind, nur einer hievon Cyano, Nitro oder Phenyl bedeuten kann.

2. Ein Verfahren nach Anspruch 1, worin die genannte Verbindung der Formel

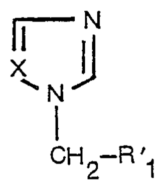

entspricht, worin:

X ein Vertreter aus der aus N und CH bestehenden Gruppe ist;

$R_1'$ ein Vertreter aus der aus den Resten

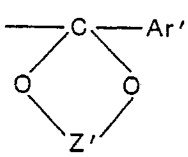

und

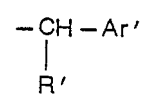

bestehenden Gruppe ist, worin genanntes Z' ein Vertreter aus der aus $-CH_2-CH_2-$, $-CH_2-CH_2-CH_2-$, $-CH(CH_3)-CH_2-$, $-CH(C_2H_5)-CH_2-$, $-CH(C_3H_7)-CH_2-$ und $-CH(CH_3)-CH(CH_3)-$ bestehenden Gruppe ist; genanntes Ar' für Phenyl steht, das gegebenenfalls mit ein bis drei Substituenten substituiert ist, die aus der aus Halogen, $C_1-C_6$-Alkyl, $C_1-C_6$-Alkoxy,

Cyano und Nitro bestehenden Gruppe ausgewählt sind und R′ für $C_1$—$C_6$-Alkyl oder $C_3$—$C_4$-Alkenyloxy steht.

3. Ein Verfahren nach Anspruch 2, worin die genannte Verbindung der Formel

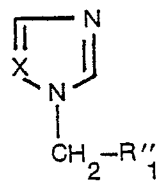

entspricht, worin

X ein aus der aus N und Ch bestehenden Gruppe ausgewählter Vertreter ist; und

$R''_1$ ein aus der aus den Resten

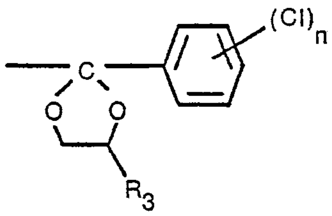
,
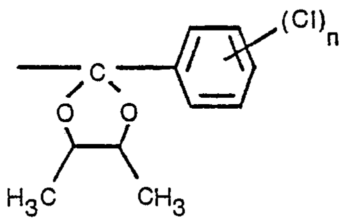
, und
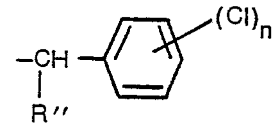

bestehenden Gruppe ausgewählter Vertreter ist, worin das genannte R″ aus der aus $C_1$—$C_4$-Alkyl und $C_2$—$C_4$-Niederalkenyloxy bestehenden Gruppe ausgewählt ist, das genannte $R_3$ für Wasserstoff oder $C_1$—$C_3$-Alkyl steht und n die ganze Zahl 1 oder 2 bedeutet.

4. Ein Verfahren nach Anspruch 3, worin die genannte Verbindung 1-[2-(2,4-Dichlorphenyl)-4-methyl-1,3-dioxolan-2-ylmethyl]-1*H*-1,2,4-triazol ist.

5. Ein Verfahren nach Anspruch 3, worin die genannte Verbindung 1-[2-(2,4-Dichlorphenyl)-1,3-dioxolan-2-ylmethyl]-1*H*-1,2,4-triazol ist.

6. Ein Verfahren nach Anspruch 3, worin die genannte Verbindung 1-[2-(2,4-Dichlorphenyl)-4-ethyl-1,3-dioxolan-2-ylmethyl]-1*H*-1,2,4-triazol ist.

7. Ein Verfahren nach Anspruch 3, worin die genannte Verbindung 1-[2-(2,4-Dichlorphenyl)-4-propyl-1,3-dioxolan-2-ylmethyl]-1*H*-1,2,4-triazol ist.

8. Ein Verfahren nach Anspruch 3, worin die genannte Verbindung 1-[2-(2,4-Dichlorphenyl)-pentyl]-1*H*-1,2,4-triazol ist.

9. Ein Verfahren nach Anspruch 3, worin die genannte Verbindung 1-[2-(2,4-Dichlorphenyl)-4-ethyl-1,3-dioxolan-2-ylmethyl]-1*H*-imidazol ist.

10. Ein Verfahren nach Anspruch 3, worin die genannte Verbindung 1-(β-Allyloxy-2,4-dichlorphenethyl)imidazol ist.

11. Ein Verfahren nach einem der Ansprüche 1 bis 10, worin die Verbindung als der wirksame Bestandteil in eine ein Trägermaterial enthaltende Zusammensetzung einverleibt wird.

12. Ein Verfahren nach einem der Ansprüche 1 bis 11, worin die Zusammensetzung 0,1 bis 10 Gew.-% wenigstens einer Verbindung der Formel (I), wie in einem der Ansprüche 1 bis 10 definiert, umfaßt.

13. Ein Verfahren nach einem der Ansprüche 1 bis 12 zum Schutz von Textilien als unbelebte organische Substrate.

14. Ein Verfahren nach einem der Ansprüche 1 bis 13 zum Schutz von aus Baumwolle, Polyamid, Polyacrylnitril oder Polyester bestehenden Textilsubstraten.

15. Ein Verfahren nach einem der Ansprüche 1 bis 12 zum Schutz von Holz.

16. Ein Verfahren nach einem der Ansprüche 1 bis 15, worin von 50 bis 20.000 Teile pro Million wenigstens einer Verbindung der Formel (I), wie in einem der Ansprüche 1 bis 10 definiert, auf das zu schützende Material aufgebracht bzw. in das Material einverleibt werden.

17. Ein Verfahren nach einem der Ansprüche 1 bis 16, worin auf den Anstrich oder das Holz oder ein anderes unbelebtes organisches Substrat auch ein Detergens-Material aufgebracht bzw. in solche Substrate einverleibt wird.

18. Ein Verfahren nach Anspruch 17, worin die Verbindung und das Detergens-Material als ein antiseptisches Detergens aufgebracht bzw. einverleibt werden.

19. Ein Verfahren nach Anspruch 18, worin das antiseptische Detergens von 0,1 bis 20 Gew.-% wenigstens einer Verbindung der Formel (I), wie in einem der Ansprüche 1 bis 10 definiert, umfaßt.

20. Ein Verfahren nach Anspruch 18, worin das antiseptische Detergens von 0,1 bis 3 Gew.-% wenigstens einer Verbindung der Formel (I), wie in einem der Ansprüche 1 bis 10 definiert, umfaßt.

21. Die Verwendung eines Mittels, umfassend ein Trägermaterial und als einen wirksamen Bestandteil eine antimikrobiell wirksame Menge wenigstens einer Verbindung mit der Formel (I), wie in einem der Ansprüche 1 bis 10 definiert, zum Schutz von Anstrichen und Holz und anderen unbelebten organischen Substraten vor einer Schädigung durch Mikroorganismen.

22. Die Verwendung eines Mittels nach Anspruch 21, worin das Mittel von 0,1 bis 10% des wirksamen Bestandteiles enthält.

23. Die Verwendung eines antiseptischen Detergens, umfassend ein Detergens-Material und als einen wirksamen Bestandteil eine antimikrobiell wirksame Menge wenigstens einer Verbindung der Formel (I), wie in einem der Ansprüche 1 bis 10 definiert, zum Schutz von Anstrichen und Holz und anderen unbelebten organischen Substraten vor einer Schädigung durch Mikroorganismen.

24. Die Verwendung eines antiseptischen Detergens nach Anspruch 23, worin das Detergens von 0,1 bis 20 Gew.-% aktiven Bestandteil enthält.

25. Die Verwendung eines antiseptischen Detergens nach Anspruch 23, worin das Detergens von 0,1 bis 3 Gew.-% aktiven Bestandteil enthält.